# EUROPÄISCHE PATENTSCHRIFT

(11) **EP 1 591 318 B1**
(45) Veröffentlichungstag und Bekanntmachung des Hinweises auf die Patenterteilung: **19.03.2008**
(21) Anmeldenummer: 05007460.8
(22) Anmeldetag: 05.04.2005
(51) Int. Cl.: B60R 13/02

(54) **Verfahren zum Herstellen eines Innenverkleidungsteils und Innenverkleidungsteil**
Method for producing an internal trim and internal trim
Procédé de fabrication d'une garniture intérieure et garniture intérieure

(30) Priorität: 28.04.2004 DE 102004020690
(43) Veröffentlichungstag der Anmeldung: 02.11.2005
(73) Patentinhaber: Lisa Dräxlmaier GmbH, 84137 Vilsbiburg (DE)
(72) Erfinder: Foltin, Sebastian, 76646 Bruchsal (DE); Matthes, Frank, 75015 Bretten (DE)
(74) Vertreter: HOFFMANN EITLE

(56) Entgegenhaltungen:
- EP-B- 1 210 249
- DE-A1- 4 137 135
- PATENT ABSTRACTS OF JAPAN Bd. 016, Nr. 339 (M-1284), 22. Juli 1992 (1992-07-22) & JP 04 101801 A (HONDA MOTOR CO LTD; others: 02), 3. April 1992 (1992-04-03)
- PATENT ABSTRACTS OF JAPAN Bd. 015, Nr. 283 (M-1137), 18. Juli 1991 (1991-07-18) & JP 03 099956 A (HONDA MOTOR CO LTD; others: 02), 25. April 1991 (1991-04-25)

## Beschreibung

### Gebiet der Erfindung

Die vorliegende Erfindung bezieht sich auf ein Verfahren zum Herstellen eines Innenverkleidungsteils für Fahrzeuge mit einer Echtholzdekorschicht und einer darauf vorgesehenen, transparenten Kunststoffbeschichtung, wobei das Innenverkleidungsteil wenigstens eine Öffnung begrenzt, die in ihrem Randbereich bzw. zumindest einem Teil ihres Randbereichs einen Radius aufweist. Darüber hinaus bezieht sich die vorliegende Erfindung auf ein derartiges Innenverkleidungsteil.

Als Beispiel für derartige Innenverkleidungsteile ist die Mittelkonsole für Kraftfahrzeuge zu erwähnen. Bei den Öffnungen kann es sich z. B. um Aussparungen für ein Staufach, einen Aschenbecher oder um Schalteröffnungen handeln. In Bezug auf den Einsatz der Innenverkleidungsteile ist die vorliegende Erfindung nicht auf die Fährzeugart beschränkt, sondern sie kann vielmehr auf dem Gebiet der Straßen-, Schienen-, Wasser- und Luftfahrzeuge, etc. eingesetzt werden.

### Hintergrund der Erfindung

Die eingangs erwähnten Innenverkleidungsteile für Fahrzeuge sind im Stand der Technik gut bekannt. Zum Herstellen derartiger Innenverkleidungsteile bieten sich verschiedenartige Verfahren an.

So ist der allgemeine Verfahrensablauf bei der Herstellung derartiger Innenverkleidungsteile derart, dass zunächst ein Träger mit einem Furnier aus Zwischenlagen und einem Deckfurnier aus Echtholz in einem Pressvorgang verpresst und somit verbunden werden. Im Anschluss an diese Verbindung erfolgt die Beschichtung des Deckfurniers mit einem transparenten Kunststoff. Diese Beschichtung kann beispielsweise durch Lackieren, d. h. Aufsprühen, hergestellt werden. Es hat sich jedoch als vorteilhaft herausgestellt, diese Beschichtung in einer Spritzgießmaschine aufzuspritzen.

Nun ergeben sich hinsichtlich des Beschichtungsprozesses durch Spritzgießen in den bisher angestrebten Verfahren die folgenden Probleme. Zunächst wurde bei der Beschichtung mit dem transparenten Kunststoff der Verbund aus Träger und Furnierlaminat in die Spritzgießmaschine eingelegt. In diesem Verbund war die Öffnung bereits ausgespart, so dass dieser Bereich beim Beschichtungsvorgang ebenfalls ausgespart wurde. Dies führt jedoch dazu, dass sich während des Beschichtungsprozesses, d. h. des Aufspritzens, Fließnähte um solche Durchbrüche bilden. Mit anderen Worten ist in einem der Werkzeuge (Oberwerkzeug, Unterwerkzeug) der Spritzgießmaschine ein Eingusskanal vorgesehen, durch welchen der transparente Kunststoff in fluider Form in den Formenhohlraum, in dem sich der Verbund aus Träger und Furnierlaminat befindet, eingespritzt wird. Von diesem Eingusskanal fließt der transparente Kunststoff über die zu beschichtende Oberfläche und bildet nach dem Aushärten die Beschichtung. Durch die Aussparung bzw. die Öffnung in dem Verbundteil wird jedoch die Fließfront des transparenten Kunststoffs gestört, so dass sich die oben erwähnten Fließnähte bilden. Darüber hinaus kann durch die Aussparung keine konstante Fließgeschwindigkeit des transparenten Kunststoffs in der Spritzgießmaschine eingehalten werden, wodurch die Oberflächenqualität der Beschichtung negativ beeinflusst wird. Gerade die Oberflächenqualität ist jedoch bei einem Innenverkleidungsteil wesentlich, insbesondere für Kraftfahrzeuge, weil diese Teile erhöhten Anforderungen hinsichtlich der Optik und Haptik entsprechen. Angesichts dieser Gesichtspunkte ist das oben beschriebene Verfahren nachteilig.

Um diese Problematik zu beheben, wurde ein alternatives Verfahren erprobt. Bei diesem zweiten Verfahren wird ein Furnierlaminat vollflächig auf den Grundträger aufgebracht und nachfolgend der Verbund aus Träger und Furnierlaminat in einem Tiefziehvorgang im Bereich der vorzusehenden Öffnung verformt. Die Öffnung wird in einem späteren Schritt ausgeschnitten oder ausgefräst. Mit anderen Worten ist der Verbund aus Träger und Furnierlaminat zunächst im Wesentlichen planar und bildet eine geschlossene Oberfläche. Wie bereits eingangs erwähnt wurde, ist jedoch der Randbereich der Öffnung mit einem Radius zu versehen, der aus optischen und haptischen Gründen erforderlich ist. Nun sind bei diesem Verfahren die geometrischen Freiheiten, durch die Tiefziehfähigkeit des eingesetzten Furnierlaminats, stark limitiert. Ferner kann aufgrund der begrenzten Tiefziehbarkeit des Furnierlaminats der Randbereich der Öffnung nur mit einem größeren Radius versehen werden bzw. ist die erreichbare Tiefe des Furnierlaminats, d. h. die Tiefe bis zu der das Furnierlaminat reicht, dadurch beschränkt. Somit ist die Echtholzbeschichtung nur in einem Randbereich der Öffnung bis zu einer geringfügigen Tiefe und aus dem Innenverkleidungsteil sichtbar. Darüber hinaus ist bei diesem Verfahren ein hoher Materialeinsatz notwendig, da sich das Furnierlaminat auch über die Öffnung erstreckt und somit ein Teil des Furnierlaminats beim Fertigprodukt als Abfall entfällt. Darüber hinaus muss auch der Bereich der Öffnung in allen weiteren möglicherweise notwendigen Prozessschritten (Schleifen, Kitten, Bleichen usw.) mitbehandelt werden. Somit weist auch dieses alternative Verfahren Nachteile auf.

Als druckschriftlicher Stand der Technik ist die EP 1 210 249 B1 zu nennen. Diese offenbart hinsichtlich eines Verfahrens zum Herstellen eines Innenverkleidungsteils für Fahrzeuge mit einer Echtholzdekorschicht, das einen Radius in seinem Randbereich aufweist, die Schritte des Einlegens eines flächigen geschlossenen Trägers und eines Furniers, das aus wenigstens der Echtholzdekorschicht gebildet ist, in eine Pressvorrichtung, wobei das Furnier derart ausgestaltet und auf dem Träger angeordnet ist, dass es den Träger im Randbereich des Trägers überlappt. Ferner ist das Verpressen des Trägers mit dem Furnier zu einem Verbund offenbart, wodurch der überlappende Teil des Furniers abgequetscht wird, sodass sich das Furnier im Randbereich des Trägers an diesen anlegt und einen Radius bildet.

Folglich offenbart die EP 1 210 249 B1 ferner ein Innenverkleidungsteil für ein Fahrzeug mit einem Furnier, das zumindest aus einer Echtholzdekorschicht gebildet ist und einem Träger, der in wenigstens einem Teil seines Randbereichs in einen Radius übergeht, wobei das Furnier auf dem Träger angeordnet und mit dem Träger derart verbunden ist, dass das Furnier mit einer randseitigen Stirnfläche dem durch den Träger vorgegebenen Radius flächig an dem Träger anliegend folgt, sodass an dem Teil des Randbereichs des Trägers ein Radius ausgebildet ist.

Ein Innenverkleidungsteil mit einer Öffnung und ein entsprechendes Verfahren zum Herstellen eines solchen Innenverkleidungsteils, wobei das Innenverkleidungsteil zusätzlich mit einem transparenten Kunststoff überspritzt ist, ist diesem Stand der Technik nicht zu entnehmen, aber aus dem JP-A-04101801 bekannt; bei einer Betrachtung von außen auf die Öffnung bleibt die Echtholzdekorschicht im Randbereich der Öffnung aber nicht sichtbar, was für ein Luxusauto problematisch sein kann.

### Zusammenfassung der Erfindung

Folglich besteht das der Erfindung zugrunde liegende technische Problem darin, ein Verfahren zur Herstellung eines Innenverkleidungsteils mit einer Echtholzdekorschicht und einer darauf vorgesehenen transparenten Kunststoffbeschichtung, die durch Spritzgießen aufgebracht wird, wobei das Innenverkleidungsteil wenigstens eine Öffnung mit einem, wenigstens in einem Teil des Randbereichs der Öffnung vorgesehen, Radius aufweist, vorzuschlagen, das hinsichtlich der oben geschilderten Problematiken verbessert ist und ferner entsprechend auch ein derart verbessertes Innenverkleidungsteil vorzuschlagen.

Dieses technische Problem wird durch ein Verfahren gemäß den Merkmalen des Patentanspruchs 1, sowie ein Innenverkleidungsteil gemäß der Merkmale des Patentanspruchs 7 gelöst.

So offenbart die vorliegende Erfindung ein Verfahren zum Herstellen eines Innenverkleidungsteils für Fahrzeuge mit einer Echtholzdekorschicht und einer darauf vorgesehenen transparenten Kunststoffbeschichtung, das wenigstens eine Öffnung mit einem Radius in wenigstens einem Teil ihres Randbereichs aufweist. Wie bereits erwähnt, kann es sich bei dem Innenverkleidungsteil um die Mittelkonsole eines Kraftfahrzeugs handeln und bei den Öffnungen oder der Öffnung um beispielsweise die Öffnung für einen Stauraum, einen Aschenbecher oder um Schalteröffnungen. Der Randbereich derartiger Öffnungen ist aus haptischen und optischen Gründen mit einem Radius zu versehen. Bevorzugter Weise weist der gesamte Randbereich einen Radius auf. Es ist jedoch auch denkbar, dass nur eine Seite bzw. Kante des Randbereichs mit einem Radius versehen ist. Bei dem erfindungsgemäßen Verfahren wird zunächst ein flächig geschlossener Träger in eine Pressvorrichtung eingelegt. Bei dem Träger kann es sich beispielsweise um einen Leichtmetalldruckguss aus Aluminium oder Magnesium, um Aluminiumbleche, Kunststoffe oder Kombinationen davon handeln. Darüber hinaus wird auf dem Träger in der Pressvorrichtung ein Furnier platziert, das aus wenigstens der Echtholzdekorschicht gebildet ist. Ferner kann das Furnier weitere Zwischenlagen (z. B. aus Buche), aufweisen, die mit der Echtholzdekorschicht (z. B. aus Ahorn) verklebt sind, um das Furnier (in diesem Fall ein Laminat) zu bilden. Das Furnier ist dabei derart ausgestaltet und auf dem Träger angeordnet, dass es den Träger wenigstens im Teil des Randbereichs der vorzusehenden Öffnung überlappt. Darunter ist beispielsweise zu verstehen, dass das Furnier derart ausgestaltet ist, dass es eine Öffnung bzw. einen Durchbruch aufweist, der von seinen Ausmaßen her kleiner als die vorzusehende Öffnung ist. Dadurch überlappt das Furnier im Randbereich der vorzusehenden Öffnung den Träger in die vorzusehende Öffnung hinein. Darüber hinaus weist der Träger in diesem überlappten Randbereich eine Quetschkante auf. Nachdem das Furnier und der Träger derart in der Pressvorrichtung platziert wurden, erfolgt ein Verpressen des Trägers mit dem Furnier zu einem Verbund, wodurch der überlappende Teil des Furniers an der Quetschkante des Trägers abgequetscht bzw. abgeschert wird, so dass sich das Furnier in dem Teil des Randbereichs der vorzusehenden Öffnung, in dem das Abquetschen erfolgt, vorzugsweise in dem gesamten Randbereich der Öffnung, an den Träger angelegt und einen Radius bildet. Dabei kann sich das Furnier im Vergleich zu dem eingangs zweitgenannten Verfahren tiefer in die vorzusehende Öffnung erstrecken, so dass beim Endprodukt das Echtholz im Umbugbereich (Durchbruchbereich bzw. Randbereich) der Öffnung im Endprodukt besser sichtbar ist. Dies wird dadurch ermöglicht, dass durch das Abquetschen des Furniers an der Quetschkante des Trägers kein Tiefziehen des Furniers mehr notwendig ist, so dass keine oder geringere geometrische Beschränkungen im Vergleich zu dem oben genannten zweiten Verfahren auftreten. Im Anschluss an das Verpressen des Trägers mit dem Furnier und dem damit verbundenen Abscheren des Furniers an der Quetschkante des Trägers, wird der so erzeugte Verbund aus Träger und Furnier aus der Pressvorrichtung entnommen und in eine Spritzgießmaschine eingelegt. Im Anschluss wird ein transparenter Kunststoff in Fluidform, z. B. ein Polyurethan in einen Formhohlraum der Spritzgießmaschine eingespritzt, um das Furnier zu beschichten. Dabei bildet der Verbund aus Träger und Furnier auch im Bereich der vorzusehenden Öffnung eine mit transparentem Kunststoff zu beschichtende geschlossene Oberfläche. Mit anderen Worten wird die Oberfläche des Furniers, sowie der auch im Bereich der Öffnung flächig geschlossene Träger mit transparentem Kunststoff beschichtet. Dadurch liegt beim Beschichten des Innenverkleidungsteils in der Spritzgießmaschine keine Öffnung vor, so dass die Fließeigenschaften im Vergleich zu dem eingangs genannten ersten Verfahren, in dem eine Öffnung bereits vor dem Gießen vorgesehen ist, verbessert sind. Nach dem Aushärten des transparenten Kunststoffs wird die Öffnung ausgebildet, was beispielsweise durch Ausfräsen oder Ausschneiden erfolgen kann. Gemäß der obigen Ausführungen ermöglicht das erfindungsgemäße neue Verfahren ein Innenverkleidungsteil herzustellen, das in einem Spritzgießverfahren mit einer transparenten Kunststoffbeschichtung versehen wird, wobei einerseits beim Spritzgießen keine Öffnungen, die die Fließeigenschaften des fluidförmigen transparenten Kunststoffs beeinträchtigen könnten, vorliegen und andererseits kein Tiefziehvorgang des Furniers notwendig ist, so dass die geometrischen Beschränkungen, die durch einen derartigen Vorgang hervorgerufen werden, bei dem erfindungsgemäßen Verfahren nicht auftreten.

Folglich liegt der vorliegenden Erfindung der Gedanke zugrunde, ein für die Beschichtung mit transparentem Kunststoff flächiges, durchgängiges Zwischenprodukt zu schaffen und zugleich das auf dem Träger platzierte Furnier beim Verpressen der Trägers mit dem Furnier am Träger abzuquetschen und dadurch geometrische Beschränkungen zu minimieren. Durch das erfindungsgemäße Verfahren wird ermöglicht, ein Innenverkleidungsteil für Fahrzeuge mit einer Echtholzdekorschicht und einer darauf vorgesehenen transparenten Kunststoffbeschichtung durch Aufspritzen eines transparenten Kunststoffs herzustellen, wobei im Vergleich zu dem oben erwähnten Verfahren mit durchgängiger Furnierbeschichtung (tiefere) Geometrien mit Echtholz in Verbindung mit der optisch hervorragenden transparenten Kunststoffbeschichtung möglich sind. Darüber hinaus wird die Nacharbeit gemäß dem erfindungsgemäßen Verfahren reduziert, weil die Kantenbildung im Randbereich der Öffnung durch den Abquetschvorgang bereits optimal abläuft. Ferner kann das Flussverhalten des fluidförmigen transparenten Kunststoffs beim Spritzgießen durch die flächige Ausgestaltung optimiert werden und der Materialeinsatz im Vergleich zu den oben erwähnten Verfahren reduziert werden. Auch müssen im Bereich der vorzusehenden Öffnungen Verfahrensschritte, wie Schleifvorgänge oder Kittvorgänge nicht durchgeführt werden.

Weitere vorteilhafte Ausführungsformen der vorliegenden Erfindung sind in den Unteransprüchen definiert.

So legt sich beim Verpressen des Furniers mit dem Träger das Furnier vorteilhafter Weise derart an den Träger an, dass eine die Stärke des Furniers definierende, der vorzusehenden Öffnung zugewandte Stirnfläche des Furniers an einer Stufenfläche einer die Quetschkante bildenden Stufe des Trägers anliegt, deren Tiefe der Stärke des Furniers entspricht, so dass wenigstens in dem Teil des Randbereichs der Öffnung ein bündiger Abschluss zwischen Furnier und Träger geschaffen wird. Durch den bündigen Abschluss zwischen Furnier und Träger wird verhindert, dass sich in diesem Bereich, d. h. dem Bereich des Abschlusses eine Stufe bildet. Dadurch werden die Fließeigenschaften beim Beschichten mit dem transparenten Kunststoff weiter verbessert. Um es mit anderen Worten auszudrücken, ist die Quetschkante des Trägers derart ausgebildet, dass sie eine Stufe bildet, die eine Stufenfläche aufweist. Die Stufenfläche weist ferner der vorzusehenden Öffnung zugewandt eine scharfe Kante auf, die als Quetschkante dient und geht auf der der Öffnung abgewandten Seite in einen Radius über. Nun entspricht die Fläche der Stufe zwischen der scharfen Kante und dem Übergang zu dem Radius der Stirnfläche des Furniers an der der Öffnung zugewandten Seite. Folglich schließt die scharfe Kante mit der Oberfläche der Echtholzdekorschicht des Furniers ab, um einen bündigen Abschluss zu bilden.

Um ein sauberes Abquetschen des Furniers an der Quetschkante des Trägers zu bewerkstelligen, wird der Träger derart in die Pressvorrichtung eingelegt, dass die Quetschkante des Trägers normal zu einer Entformrichtung des Verbunds aus Träger und Furnier verläuft.

Wie bereits aus dem Vorstehenden ersichtlich wird, dient der Träger beim Verpressen nicht nur als Bestandteile des Innenverkleidungsteils, sondern auch als Werkzeug und weist daher die Quetschkante auf. Dadurch wird es möglich, einen bündigen, sauberen Abschluss einer begrenzten Öffnung zu bilden.

Vorteilhafter Weise ist der Träger derart in die Pressvorrichtung eingelegt, dass er auf einem Unterwerkzeug der Pressvorrichtung aufliegt und relativ zu dem Unterwerkzeug festgelegt ist. Dadurch wird bewerkstelligt, dass der Träger beim Verpressen mit dem Furnier und dem damit verbundenen Abquetschen des Furniers an der Quetschkante des Trägers in dem Unterwerkzeug nicht verrutscht. Zu diesem Zweck kann der Träger beispielsweise einen Ansatz umfassen, der in eine Aussparung in dem Unterwerkzeug eingreift und den Träger gegen ein Verrutschen sichert.

Darüber hinaus wird vorteilhafter Weise der transparente Kunststoff beim Spritzgießen im Bereich der vorzusehenden Öffnung in den Formhohlraum eingebracht. Mit anderen Worten befindet sich der Eingusskanal der Spritzgussmaschine in einer derartigen Position, dass das Einspritzen des fluidförmigen transparenten Kunststoffs in den Formhohlraum in dem Bereich der vorzusehenden Öffnung erfolgt. Nach dem Aushärten des transparenten Kunststoffs und dem Herausnehmen des Verbunds aus Träger, Furnier und Kunststoffbeschichtung muss der Einguss entfernt werden. Da dies in einem Bereich erfolgt, der später ausgeschnitten bzw. ausgefräst wird (den Bereich der Öffnung), kann der Einguss ohne Beschädigung des Innenverkleidungsteils als Endprodukt entfernt werden.

Neben dem erfindungsgemäßen Verfahren schlägt die vorliegende Erfindung auch ein entsprechendes Innenverkleidungsteil für ein Fahrzeug mit wenigstens einer durch das Innenverkleidungsteil begrenzten Öffnung vor. Das Innenverkleidungsteil umfasst ein Furnier, das zumindest aus einer Echtholzdekorschicht gebildet ist. Auch in diesem Fall kann es sich bei dem Furnier um ein Laminat aus mehreren Schichten handeln, wie es oben beschrieben wurde. Darüber hinaus ist ein Träger vorgesehen, der in wenigstens einem Teil eines Randbereichs der Öffnung eine öffnungszugewandte, mit einer scharfen Kante versehene Stufe mit einer Stufenfläche, deren Tiefe der Stärke des Furniers entspricht und die öffnungsabgewandt in einen Radius übergeht, aufweist. Bei dem erfindungsgemäßen Innenverkleidungsteil ist das Furnier derart auf dem Träger angeordnet und mit dem Träger verbunden, dass das Furnier mit einer öffnungsseitigen Stirnfläche, die die Stärke des Furniers definiert, an der Stufenfläche anliegt und dem durch den Träger vorgegebenen Radius flächig an dem Träger anliegend folgt. Dadurch wird in dem Teilrandbereich der Öffnung ein Radius ausgebildet, der sich bis zu einer gewissen Tiefe in die Öffnung hinein erstreckt, so dass die Echtholzdekorschicht auch im Bereich des Rands der Öffnung sichtbar bleibt. Ferner ist auf dem Furnier eine transparente Kunststoffbeschichtung vorgesehen. Somit wird ein Innenverkleidungsteil geschaffen, das hinsichtlich der Tiefe, bis zu der die Echtholzdekorschicht sichtbar ist, verbessert ist und das leichter und günstiger herzustellen ist und bei dem gleichzeitig eine optisch, wie auch haptisch, einwandfreie Oberfläche geschaffen ist.

Vorteilhafter Weise weist der Träger des erfindungsgemäßen Innenverkleidungsteils eine Oberfläche auf, auf der das Furnier angebracht ist und es ist in dem Träger ein Durchbruch (Öffnung) vorgesehen. Im Querschnitt des Trägers weist die Oberfläche in einem Randbereich des Durchbruchs einen Radius auf, der dem Durchbruch zugewandt in einen die Stufenfläche der Stufe bildenden Absatz übergeht, an dessen dem Durchbruch zugewandten Ende die scharfe Kante ausgebildet ist, die bei dem erfindungsgemäßen Verfahren als Quetschkante dient.

Weitere Aufgaben, Vorteile und Merkmale der vorliegenden Erfindung werden durch die folgende genaue Beschreibung einer beispielhaften Ausführungsform unter Bezugnahme auf die begleitenden Zeichnungen ersichtlich.

### Kurze Beschreibung der Zeichnungen

In den begleitenden Zeichnungen kennzeichnen gleiche Bezugszeichen gleiche oder ähnliche Teile. Bei den Zeichnungen handelt es sich um beispielhafte Darstellungen einer bevorzugten Ausführungsform, die in keiner Weise als die vorliegende Erfindung, wie sie in den begleitenden Patentansprüchen definiert ist, beschränkend anzusehen ist.

### In den Zeichnungen zeigt:

- Figur 1A-E: eine beispielhafte Ausführungsform eines erfindungsgemäßen Verfahrens schematisch in fünf Verfahrensschritten in einer Teilansicht.
- Figur 2: eine perspektivische Ansicht eines Innenverkleidungsteils vor dem Beschneiden der Öffnung.
- Figur 3: einen Querschnitt im Bereich A entlang der Linie 3-3 in Figur 2.

### Beschreibung einer beispielhaften Ausführungsform

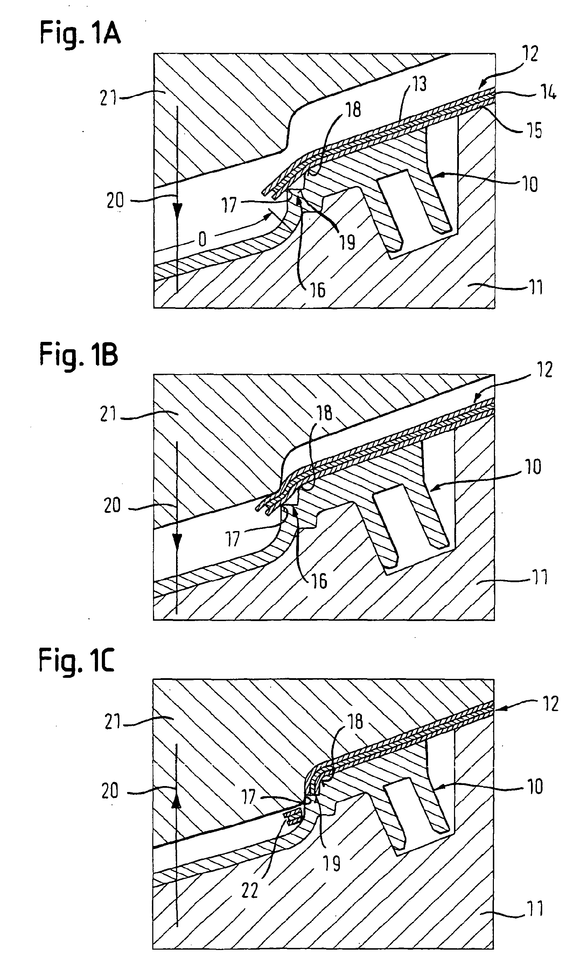

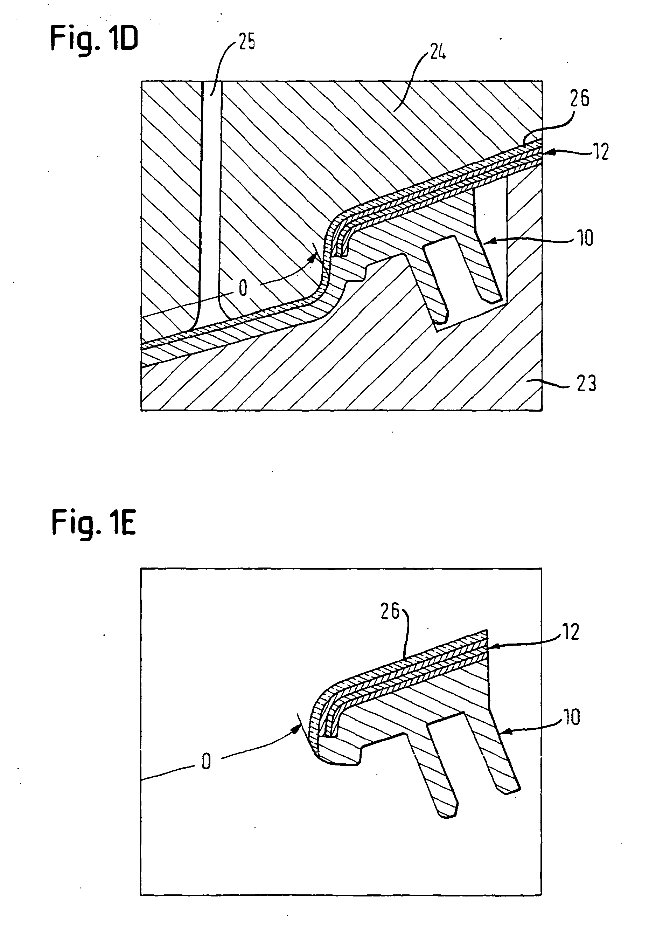

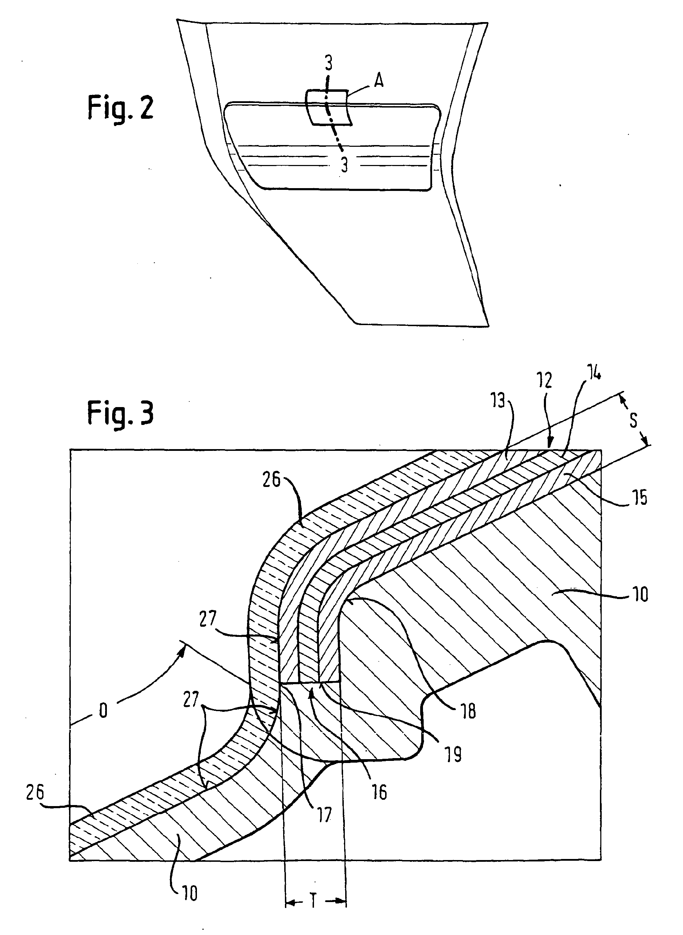

Unter Bezugnahme auf die Figuren 1 bis 3 wird im Folgenden sowohl das erfindungsgemäße Verfahren als auch das erfindungsgemäße Innenverkleidungsteil beschrieben. In den Figuren 1A bis 1C ist schematisch der Fertigungsablauf des erfindungsgemäßen Verfahrens dargestellt. In diesem Zusammenhang ist lediglich ein Teil dargestellt, der den Übergang zwischen der Öffnung bzw. der vorzusehenden Öffnung über den Randbereich zu der Innenverkleidungsteiloberfläche in nur einem Randbereich darstellt. Darüber hinaus ist dieser Teilbereich im Querschnitt dargestellt, wobei der Querschnitt ähnlich dem in Figur 3 dargestellten Querschnitt verläuft.

Gemäß dem vorliegenden Verfahren wird zunächst ein Träger 10 in das Unterwerkzeug 11 einer Pressvorrichtung eingelegt. Dabei ist der Träger 10 in dem Unterwerkzeug derart platziert, dass er in einer festgelegten Position verbleibt, ohne dass er beim Verpressen, wie es später beschrieben werden wird, verrutschten kann. Darüber hinaus wird auf dem Träger 10 ein Furnier 12, das aus wenigstens einer Echtholzdekorschicht 13 gebildet ist, platziert. In der dargestellten Ausführungsform besteht das Furnier 12 neben der Echtholzdekorschicht 13 aus weiteren Schichten 14, 15, die zusammen mit der Echtholzdekorschicht 13 verleimt sind, um ein Furnierlaminat zu bilden.

Der Träger 10 umfasst im Randbereich der auszubildenden Öffnung, die in dem Bereich O vorzusehen ist, eine Stufe 16. Die Stufe 16 ist derart ausgebildet, dass sie dem Bereich O zugewandt eine scharfe Kante 17 bildet, die im Folgenden Verfahren als Quetschkante dient. Auf der dem Bereich O abgewandten Seite der Stufe 16 geht die Stufe in einen Radius 18 über, um dann flächig im Wesentlichen planar auszulaufen. Somit bildet die Stufe 16 zwischen der Quetschkante 17 und dem Radius 18 eine Stufenfläche 19 bzw. einen Absatz.

Bei dem in Figur 1A dargestellten Verfahrensschritt, in dem der Träger 10 und das Furnier 12 in dem Unterwerkzeug 11 einer Pressvorrichtung platziert werden, wird das Furnier 12 derart auf dem Träger 10 angeordnet, dass es den Bereich der Stufe 16 überlappt. Zu diesem Zweck ist das Furnier 12 beispielsweise derart ausgebildet, dass es im Bereich der vorzusehenden Öffnung O ebenso eine Öffnung aufweist, die jedoch kleiner als die vorzusehende Öffnung O ist. Somit muss das Furnier 12 zwangsläufig den Randbereich der vorzusehenden Öffnung überlappen, in dem der Träger 10 die Quetschkante 17 aufweist.

Sind der Träger 10 und das Furnier 12, wie es oben beschrieben wurde und wie es in Figur 1A dargestellt ist, in der Pressvorrichtung platziert, wird ein Oberwerkzeug 21 der Pressvorrichtung in Pressrichtung 20 abgesenkt. Alternativ kann auch das Unterwerkzeug gegen das Oberwerkzeug angehoben werden. Durch die Ausgestaltung des Oberwerkzeugs 21 wird das Furnier 12, wie es in Figur 1B dargestellt ist, durch das Oberwerkzeug 21 gegen die Quetschkante 17 der Stufe 16 des Trägers 10 verformt und der die Quetschkante 17 überlappende Teil wird, wie es in Figur 1C dargestellt ist, bei weiterem Absenken des Oberwerkzeugs 21 abgeschert bzw. abgequetscht. Dieser abgequetschte Teil 22 kann nach dem Verpressen aus der Pressvorrichtung entnommen werden.

Wie es aus Figur 1C ersichtlich ist, wird beim Verpressen des Trägers 10 mit dem Furnier 12 der überlappende Teil 22 des Furniers 12 an der Quetschkante 17 des Trägers 10 abgequetscht. Darüber hinaus entspricht die Stufenfläche 19 bzw. der Absatz zwischen der Quetschkante 17 und dem Radius 18 der Stärke des Furniers 12 bzw. des Furnierlaminats. Dadurch wird beim Abquetschen und Pressen, wie es oben beschrieben wurde, das Furnier 12 um den Radius 18 des Trägers 10 an dem Träger 10 angelegt und liegt mit seiner dem Öffnungsbereich O zugewandten Stirnseite an der Stufenfläche 19 an. Dadurch wird erreicht, dass das Furnier 12 bzw. das Furnierlaminat bündig mit dem Träger 10 an der Quetschkante 17 abschließt. Darüber hinaus wird durch das Verpressen der Verbund zwischen Furnier 12 und Träger 10 hergestellt. Nach dem Verpressen werden das Ober- und Unterwerkzeug 21 bzw. 11 in der Entformrichtung 20 auseinander bewegt, so dass der Verbund aus Träger 10 und Furnier 12 entnommen werden kann, genauso wie der abgequetschte Teil 22 des Furniers 12.

Wie weiter aus den Figuren 1A bis 1C erkennbar ist, ist die Quetschkante 17 bzw. die Stufe 16 orthogonal zur Entform- bzw. Pressrichtung 20 ausgerichtet, so dass ein sauberes Abquetschen des überlappenden Furniers 12 erfolgen kann.

Im Anschluss wird der Verbund aus Träger 10 und Furnier 12 in eine Spritzgießmaschine eingelegt, die ebenfalls ein Unter-und ein Oberwerkzeug 23 bzw. 24 aufweist. Nach dem Einlegen werden das Unterwerkzeug 23 und das Oberwerkzeug 24 zusammengefahren, um zwischen der durch den Verbund aus Träger 10 und Furnier 12 gebildeten Oberfläche und dem Oberwerkzeug 24 einen Formenhohlraum zu bilden. Wie es aus Figur 1D ersichtlich ist, bildet der Verbund aus Träger 10 und Furnier 12 eine geschlossene Oberfläche ohne jegliche Stufen. Ferner sind in dieser Oberfläche auch keine Durchbrüche oder Öffnungen vorgesehen.

Im Anschluss wird durch den in dem Oberwerkzeug 24 ausgebildeten Eingusskanal 25 fluidförmiger, transparenter Kunststoff, vorzugsweise Polyurethan in den Formenhohlraum eingespritzt. Der Eingusskanal 25 ist vorteilhafter Weise derart angeordnet, dass er in dem Bereich O der vorzusehenden Öffnung in den Formenhohlraum mündet. Der transparente Kunststoff härtet dann in dem Formenhohlraum aus und bildet die Beschichtung 26 aus transparentem Kunststoff. Da der Verbund aus Träger 10 und Furnier 12 eine geschlossene, stufenlose Oberfläche bildet, können die Fließeigenschaften des transparenten Kunststoffs beim Spritzgießen optimiert werden und eine optisch, wie auch haptisch einwandfreie Oberfläche kann durch das Spritzgießen erzeugt werden.

Nachfolgend wird, wie es in Figur 1E dargestellt ist, die Öffnung im Bereich O herausgeschnitten, vorzugsweise ausgefräst, um das endgültige Innenverkleidungsteil der vorliegenden Erfindung herzustellen.

In Figur 2 ist ein Zwischenprodukt des vorliegenden Verfahrens vor dem Beschneiden der Öffnung in perspektivischer Form dargestellt. Ferner stellt die Figur 3 einen Querschnitt in dem Bereich A und entlang der Linie 3-3 der Figur 2 dar. Unter Bezugnahme auf die Figuren 2 und 3 ist ersichtlich, dass der Verbund aus Träger 10 und Furnier 12 nach dem Verpressen eine Rohteilgeometrie aufweist, deren Oberflächenkante bei 27 dargestellt ist. Daraus wird ersichtlich, dass der Verbund aus Träger 10 und Furnier 12 eine auch in dem Bereich der vorzusehenden Öffnung O geschlossene Oberfläche bildet und darüber hinaus entlang dieser Kanten keine Stufen auftreten. Dadurch wird ermöglicht, dass die Fließeigenschaften beim Spritzgießen der transparenten Beschichtung 26 optimiert werden können. Darüber hinaus erstreckt sich das Furnier 12 und damit die Echtholzdekorschicht 13 um den Radius 18 des Trägers 10 in der Tiefenrichtung in die Öffnung hinein, so dass bei einer Betrachtung von außen auf die Öffnung die Echtholzdekorschicht auch im Randbereich der Öffnung sichtbar bleibt.

Darüber hinaus ist aus Figur 3 ersichtlich, dass die Stufenfläche 19 bzw. der Absatz von der scharfen Kante 17 zu dem Übergang zu dem Radius 18 eine Tiefe T aufweist, die der Stärke S des Furniers 12 entspricht. Durch diese Ausgestaltung und das Abquetschen kann in dem Bereich der Kante 17 eine stufenlose Rohteilgeometrie (Oberfläche) 27 erzeugt werden, die ein optimales Überspritzen mit einem transparenten Kunststoff ermöglicht.

Um zu einem erfindungsgemäßen Innenverkleidungsteil zu gelangen, muss das in Figur 3 bzw. in Figur 2 dargestellte Innenverkleidungsteil lediglich im Bereich der Öffnung O ausgeschnitten bzw. ausgefräst werden, um den Durchbruch bzw. die Öffnung in diesem Bereich zu erzeugen.

Obwohl die Erfindung anhand der rein beispielhaften Ausführungsform und dem rein beispielhaften Verfahrensablauf beschrieben wurde, ist ersichtlich, dass verschiedenartige Variationen und Änderungen möglich sind, die dem Fachmann ersichtlich sind, ohne den Grundgedanken der vorliegenden Erfindung zu verlassen, wie er in den begleitenden Patentansprüchen definiert ist.

## Patentansprüche

1. Verfahren zum Herstellen eines Innenverkleidungsteils für Fahrzeuge mit einer Echtholz-Dekorschicht (13) und einer darauf vorgesehenen transparenten Kunststoffbeschichtung (26), das wenigstens eine Öffnung (0) mit einem Radius in wenigstens einem Teil ihres Randbereichs aufweist, umfassend die Schritte:
- Einlegen eines flächig geschlossenen Trägers (10) und eines Furniers (12), das aus wenigstens der Echtholz-Dekorschicht (13) gebildet ist, in eine Pressvorrichtung, wobei das Furnier (12) derart ausgestaltet und auf dem Träger (10) angeordnet ist, dass es den Träger wenigstens in dem Teil des Randbereichs der vorzusehenden Öffnung (O), in dem der Träger (10) eine Quetschkante (17) aufweist, überlappt,
- Verpressen des Trägers mit dem Furnier zu einem Verbund, wodurch der überlappende Teil des Furniers (12) an der Quetschkante (17) des Trägers (10) abgequetscht wird, so dass sich das Furnier in dem Teil des Randbereichs der vorzusehenden Öffnung (0) an den Träger anlegt und einen Radius bildet,
- Einlegen des Verbunds aus Träger (10) und Furnier (12) in eine Spritzgießmaschine,
- Einspritzen eines transparenten Kunststoffs (26) in einen Formhohlraum der Spritzgießmaschine zum Beschichten des Furniers, wobei der Verbund aus Träger und Furnier auch im Bereich der vorzusehenden Öffnung (0) eine geschlossene Oberfläche bildet, die mit dem transparenten Kunststoff (26) beschichtet wird,
- Ausfräsen der Öffnung (O).

2. Verfahren nach Anspruch 1, bei dem sich beim Verpressen des Furniers (12) mit dem Träger (10) das Furnier derart an den Träger anlegt, dass eine die Stärke (S) des Furniers definierende, der vorzusehenden Öffnung zugewandte Stirnfläche des Furniers an einer Stufenfläche (19) einer die Quetschkante (17) bildenden Stufe (16) des Trägers (10) anliegt, deren Tiefe (T) der Stärke (S) des Furniers (12) entspricht, so dass wenigstens in dem Teil des Randbereichs der Öffnung (0) ein bündiger Abschluss zwischen Furnier (12) und Träger (10) geschaffen wird.

3. Verfahren nach Anspruch 1 oder 2, bei dem der Träger (10) derart in die Pressvorrichtung eingelegt wird, dass die Quetschkante (17) des Trägers normal zu einer Entformrichtung (20) des Verbunds aus Träger (10) und Furnier (12) verläuft.

4. Verfahren nach einem der vorstehenden Ansprüche, bei dem der Träger (10) beim Verpressen als Werkzeug dient.

5. Verfahren nach einem der vorstehenden Ansprüche, bei dem der Träger (10) derart in die Pressvorrichtung eingelegt wird, dass er auf einem Unterwerkzeug (11) der Pressvorrichtung aufliegt und relativ zu dem Unterwerkzeug festgelegt ist.

6. Verfahren nach einem der vorstehenden Ansprüche, bei dem der transparente Kunststoff (26) im Bereich der vorzusehenden Öffnung (0) in den Formhohlraum eingebracht wird.

7. Innenverkleidungsteil für ein Fahrzeug mit wenigstens einer durch das Innenverkleidungsteil begrenzten Öffnung (O), umfassend
ein Furnier (12), das zumindest aus einer Echtholz-Dekorschicht (13) gebildet ist,
einen Träger (10), der in wenigstens einem Teil eines Randbereichs der Öffnung (O) eine öffnungszugewandte, mit einer scharfen Kante (17) versehene Stufe (16) mit einer Stufenfläche (19), deren Tiefe (T) der Stärke (S) des Furniers entspricht und die öffnungsabgewandt in einen Radius (18) übergeht, aufweist, wobei das Furnier (12) auf dem Träger (10) angeordnet und mit dem Träger (10) derart verbunden ist, dass das Furnier (12) mit einer öffnungsseitigen Stirnfläche, die die Stärke (S) des Furniers definiert, an der Stufenfläche (19) anliegt und dem durch den Träger (10) vorgegebenen Radius (18) flächig an dem Träger anliegend folgt, so dass an dem Teil des Randbereichs der Öffnung (0) ein Radius ausgebildet ist, und
eine transparente Kunststoffbeschichtung (26), die auf dem Furnier (12) vorgesehen ist.

8. Innenverkleidungsteil nach Anspruch 7, bei dem der Träger (10) eine Oberfläche aufweist, auf der das Furnier (12) angebracht ist und in dem Träger eine Öffnung (0) vorgesehen ist, wobei die Oberfläche im Querschnitt in einem Randbereich der Öffnung (0) einen Radius (18) aufweist, der der Öffnung (O) zugewandt in einen die Stufenfläche (19) der Stufe (16) bildenden Absatz übergeht, an dessen der Öffnung zugewandtem Ende die scharfe Kante (17) ausgebildet ist.

## Claims

1. Process for producing an inner cladding part for vehicles having a real-wood decorative layer (13) and a transparent plastic coating (26) provided thereon, which has at least one opening (O) having a radius in at least one part of its edge region, comprising the steps:
- inserting a two-dimensionally closed support (10) and a veneer (12), which is formed from at least the real-wood decorative layer (13), in a pressing device, wherein the veneer (12) is designed and arranged on the support (10) such that it overlaps the support at least in the part of the edge region of the opening (10) to be provided, in which the support (10) has a pinched edge (17),
- pressing the support with the veneer to form a composite, as a result of which the overlapping part of the veneer (12) is squeezed at the pinched edge (17) of the support (10), so that the veneer rests on the support in the part of the edge region of the opening (O) to be provided and forms a radius,
- inserting the composite comprising support (10) and veneer (12) in an injection-moulding machine,
- injection of a transparent plastic (26) into a moulding cavity of the injection-moulding machine for coating the veneer, wherein the composite comprising support and veneer also forms a closed surface in the region of the opening (0) to be provided, which is coated with the transparent plastic (26),
- sinking of the opening (O).

2. Process according to claim 1, in which, when pressing the veneer (12) with the support (10), the veneer rests on the support such that an end face of the veneer facing the opening to be provided and defining the thickness (S) of the veneer rests on a graduated surface (19) of a step (16) of the support (10) forming the pinched edge (17), the depth (T) of which corresponds to the thickness (S) of the veneer (12), so that a flush closure is provided between veneer (12) and support (10) at least in the part of the edge region of the opening (O).

3. Process according to claim 1 or 2, in which the support (10) is inserted into the pressing device such that the pinched edge (17) of the support runs vertically to a demoulding direction (20) of the composite comprising support (10) and veneer (12).

4. Process according to one of the above claims, in which the support (10) serves as a mould during pressing.

5. Process according to one of the above claims, in which the support (10) is inserted into the pressing device, such that it rests on a die (11) of the pressing device and is fixed relative to the die.

6. Process according to one of the above claims, in which the transparent plastic (26) is introduced into the mould cavity in the region of the opening (0) to be provided.

7. Inner cladding part for a vehicle having at least one opening (0) defined by the inner cladding part, comprising
a veneer (12), which is formed from at least one real-wood decorative layer (13),
a support (10), which has, in at least one part of an edge region of the opening (0), a step (16), which faces the opening and is provided with a sharp edge (17), having a graduated surface (19), the depth (T) of which corresponds to the thickness (S) of the veneer and which changes, facing away from the opening, into a radius (18), wherein the veneer (12) is arranged on the support (10) and is connected to the support (10) such that the veneer (12) rests on the graduated surface (19) with an opening-side end face, which defines the thickness (S) of the veneer, and follows, resting two-dimensionally on the support, the radius (18) preset by the support (10), so that a radius is formed on the part of the edge region of the opening (O),
and a transparent plastic coating (26), which is provided on the veneer (12).

8. Inner cladding part according to claim 7, in which the support (10) has a surface, to which the veneer (12) is attached and an opening (0) is provided in the support, wherein the surface has in cross-section in an edge region of the opening (O) a radius (18), which, facing the opening (0), changes into a shoulder forming the graduated surface (19) of the step (16), the sharp edge (17) being formed on the end of the shoulder facing the opening.

## Revendications

1. Procédé de fabrication d'une pièce de garniture intérieure pour des véhicules, avec une couche de décor en vrai bois (13) et un revêtement en matière synthétique (26) transparent prévu sur celle-ci, qui présente au moins une ouverture (0) avec un rayon dans au moins une partie de ce centre de bordure, comprenant les étapes consistant à :
- insérer un support (10) fermé en surface et une feuille de placage (12), formée d'au moins la couche de décor en vrai bois (13), dans un dispositif de pressage, la feuille de placage (12) étant configurée et disposée sur le support (10), de manière qu'elle chevauche le support au moins dans la partie de la zone de bordure de l'ouverture (0) à prévoir, dans laquelle le support (10) présente une arête d'écrasement (17),
- presser le support avec la feuille de placage, pour former un composite, faisant que la partie en chevauchement de la feuille de placage (12) est écrasée sur l'arête d'écrasement (17) du support (10), de manière que la feuille de placage s'applique sur le support dans la partie de la zone de bordure de l'ouverture (O) à prévoir et forme un rayon,
- insérer le composite formé du support (10) et de la feuille de plaquage (12) dans une machine à mouler par injection,
- injecter une matière synthétique (26) transparente dans un espace creux de moulage de la machine de moulage par injection pour revêtir la feuille de plaquage, le composite formé du support et de la feuille de placage formant également, dans la zone de l'ouverture (O) à prévoir, une surface fermée, revêtue de la matière synthétique (26) transparente,
- découper par fraisage l'ouverture (O).

2. Procédé selon la revendication 1, dans lequel, lors du pressage de la feuille de placage (12) avec le support (10), la feuille de placage est appliquée sur le support, de manière qu'une face frontale, définissant l'épaisseur (S) de la feuille de plaquage et tournée vers l'ouverture à prévoir, de la feuille de placage s'applique sur une face échelonnée (19) d'un échelon (16), formant l'arête d'écrasement (17), du support (10), échelon dont la profondeur (T) correspond à l'épaisseur (S) de la feuille de placage (12), de sorte que, au moins dans la partie de la zone de bordure de l'ouverture (O), soit créée une fermeture affleurée, entre la feuille de plaquage (12) et le support (10).

3. Procédé selon la revendication 1 ou 2, dans lequel le support (10) est inséré dans le dispositif de pressage, de manière que l'arête d'écrasement (17) du support s'étende perpendiculairement à une direction de démoulage (20) du composite, formé du support (10) et de la feuille de plaquage (12).

4. Procédé selon l'une des revendications précédentes, dans lequel le support (10) sert d'outil lors du pressage.

5. Procédé selon l'une des revendications précédentes, dans lequel le support (10) est inséré dans le dispositif de pressage, de manière qu'il repose sur un outil inférieur (11) de l'outil de pressage et soit fixé par rapport à l'outil inférieur.

6. Procédé selon l'une des revendications précédentes, dans lequel la matière synthétique (26) transparente est introduite dans l'espace creux de moulage, dans la zone de l'ouverture (O) à prévoir.

7. Pièce de garniture intérieure pour un véhicule, comprenant au moins une ouverture (O) délimitée par la pièce de garniture intérieure, comprenant :
une feuille de plaquage (12) formée au moins d'une couche de décor (13) en vrai bois,
un support (10), présentant, en au moins une partie d'une zone de bordure de l'ouverture (O), un échelon (16) tourné vers l'ouverture, muni d'une arête (17) à angle vif, avec une face d'échelon (19), dont la profondeur (T) correspond à l'épaisseur (S) de la feuille de placage et qui, à l'opposé de l'ouverture se transforme en un rayon (18), la feuille de placage (12) étant disposée sur le support (10) et étant reliée au support (10), de manière que la feuille de plaquage (12), par une face frontale située côté ouverture, qui définit l'épaisseur (S) de la feuille de plaquage, s'applique sur la surface d'échelon (19) et suive, en appui à plat sur le support, le rayon (18) prédéterminé par le support (10), de manière qu'un rayon soit formé sur la partie de la zone de bordure de l'ouverture (O), et
un revêtement en matière synthétique (26) transparent, prévu sur la feuille de placage (12).

8. Pièce de garniture intérieure selon la revendication 7, dans laquelle le support (10) présente une surface, sur laquelle la feuille de placage (12) est montée et, dans le support, est prévue une ouverture (O), sachant que la surface, observée en vue en coupe transversale, présente, dans une zone de bordure de l'ouverture (0), un rayon (18), qui, tourné vers l'ouverture (O), se transforme en un décrochement formant la face d'échelon (19) de l'échelon (16), décrochement sur l'extrémité, tournée vers l'ouverture, duquel est réalisée l'arête (17) à angle vif.
